## Europäisches Patentamt

## European Patent Office

## Office européen des brevets

(19)

(11) Veröffentlichungsnummer : **0 027 868**
**B1**

# EUROPÄISCHE PATENTSCHRIFT

(12)

(45) Veröffentlichungstag der Patentschrift :
**11.05.83**

(51) Int. Cl.³ : **C 22 B 34/32**

(21) Anmeldenummer : **80105035.2**

(22) Anmeldetag : **25.08.80**

(54) **Verfahren zum oxidativen Aufschluss von chromhaltigen Erzen.**

(30) Priorität : **04.09.79 DE 2935718**

(43) Veröffentlichungstag der Anmeldung :
**06.05.81 Patentblatt 81/18**

(45) Bekanntmachung des Hinweises auf die Patenterteilung : **11.05.83 Patentblatt 83/19**

(84) Benannte Vertragsstaaten :
**DE FR GB IT**

(56) Entgegenhaltungen :
**DE A 2 426 915**
**DE A 2 542 054**
**DE A 2 607 131**
**DE B 1 016 940**
**DE B 1 533 076**
**DE C 1 417 888**
**US A 1 964 719**
**US A 2 199 929**
**US A 4 162 295**

(73) Patentinhaber : **BAYER AG**
**Zentralbereich Patente, Marken und Lizenzen**
**D-5090 Leverkusen 1, Bayerwerk (DE)**

(72) Erfinder : **Rademachers, Jakob, Dr.**
**Hoeninghausstrasse 34**
**D-4150 Krefeld 12 (DE)** ·
Erfinder : **Pflugmacher, Ingo, Dr.**
**Asternstrasse 16**
**D-4005 Meerbusch 3 (DE)**

## Verfahren zum oxidativen Aufschluß von chromhaltigen Erzen

Die vorliegende Erfindung betrifft ein Verfahren zum oxidativen Aufschluß von Chromerzen bei dem die aufzuschließende Mischung in Form eines Agglomerates eingesetzt wird.

Üblicherweise wird Chromerz mit Alkalien, z. B. Natriumhydroxid oder Natriumcarbonat, bei Temperaturen um etwa 1 000 °C oxidativ aufgeschlossen. Bei diesen Temperaturen treten in Drehrohröfen aufgrund der Zusammensetzung des aufzuschließenden Gemisches praktisch immer Verklebungen an den Ofenwandungen auf, selbst wenn der Aufschlußmischung bedeutende Anteile an Magerungsmitteln zugesetzt werden.

Es sind bereits Verfahren bekannt, bei denen diese Verklebung durch Einsatz einer granulierten Aufschlußmischung vermieden wird. So ist in DE-AS 10 16 940 ein Verfahren beschrieben, bei dem Formlinge, die durch drucklose Verformung erhalten wurden und porös sind oder während der Umsetzung porös werden, zum Aufschluß eingesetzt werden. Des weiteren ist nach der DE-OS 24 26 915 ein Verfahren zur Herstellung von Natriumchromat durch Pelletisieren eines Gemisches vom Chromiterz und Natriumcarbonat unter Verwendung einer wäßrigen Pelletisierflüssigkeit bekannt.

Gegenstand der vorliegenden Erfindung ist nun ein Verfahren zum oxidativen Aufschluß von chromhaltigen Erzen durch Agglomerieren eines Gemisches aus chromhaltigen Erzen, alkalischen Stoffen und Magerungsmitteln, Aufschluß und anschließendes Auslaugen dieser Mischung, welches dadurch gekennzeichnet ist, daß die Feuchtigkeit über feuchtes Rückerz eingebracht wird und daß das feuchte Rückerz mit fein verteiltem Chromerz und alkalischen Stoffen gemischt, agglomeriert, gegebenenfalls getrocknet und anschließend einem oxidativen Aufschluß unterworfen wird.

Bei dem vorgeschlagenen Verfahren wird das aufzuschließende, fein verteilte, vorzugsweise gemahlene Erz mit alkalischen Stoffen, vorzugsweise Natriumhydroxid und/oder Natriumcarbonat und noch feuchtem sogenannten Rückerz gemischt, agglomeriert, gegebenenfalls getrocknet und anschließend einem oxidativen Aufschluß, vorzugsweise mit Luft als Oxidationsmittel, unterworfen. Als feuchtes Rückerz wird ausgelaugtes, gegebenenfalls gewaschenes Aufschlußgut eines oder mehrerer vorhergehender Aufschlüsse eingesetzt. Der Wasseranteil der eingesetzten Laugungsrückstände liegt je nach Aufschlußbedingungen zwischen ca. 15 und ca. 25 Gew.-%.

Der Vorteil des vorgeschlagenen Verfahrens besteht im Einsatz von Agglomeraten, die ohne den sonst notwendigen Aufwand des Verformens zu Granalien oder Pellets erhalten werden. Auch wird bei dem vorliegenden Verfahren die Einschaltung von Granuliertellern oder Verformungsmaschinen sowie die Notwendigkeit weiterer Energiezufuhr zur Verdampfung des als Granulierflüssigkeit dienenden Wassers überflüssig. Üblicherweise wird in einer Anlage zur Herstellung von Chromat bzw. Bichromat das von der chromathaltigen Lauge abfiltrierte und gegebenenfalls gewaschene Rückerz getrocknet. Dieser Trockenschritt wird erfindungsgemäß nun bei Bedarf erst nach Vermischen der Ausgangsmaterialien vollzogen und damit gegenüber bekannten Verfahren ein energieaufweniger Trockenschritt eingespart. Die nach dem vorliegenden Verfahren erhaltene krümelige Mischung kann direkt in den Aufschlußofen geführt oder auch nach der dann erforderlichen Trocknung zwischengelagert werden. Die Agglomerate besitzen eine genügende Festigkeit, um gefördert bzw. gebunkert werden zu können. Die Festigkeit der Agglomerate, die zu ca. 70 % Körnungsdurchmesser von 0,1 bis ca. 3 mm besitzen, kann durch Zugabe von ca. 25 Gew.-% Natriumhydroxid anstelle der vorzugsweise eingesetzten Soda noch erhöht werden.

Das gleichzeitige Mischen und Granulieren erfolgt in den üblicherweise eingesetzten Vorrichtungen, zweckmäßig in feststehenden, horizontal angeordneten Trommeln mit rotierenden Mischwerkzeugen. Dieser Vorgang kann sowohl diskontinuierlich als auch kontinuierlich durchgeführt werden. Die Feuchtigkeit der erhaltenen Agglomerate wird vorzugsweise so eingestellt, daß sie zwischen 5 und 20 Gew.-%, vorzugsweise zwischen 10 und 15 Gew.-%, beträgt. Diese Einstellung erfolgt jedoch nur durch die Menge und den Feuchtigkeitsgehalt des Rückerzes, zusätzliches Wasser wird nicht zugegeben. Die Trocknung der mit einem erdfeuchten krümeligen Gut vergleichbaren Agglomerate kann in einem Trockner oder im Aufschlußofen selbst erfolgen.

Mit dem vorliegenden Verfahren läßt sich also vorteilhafterweise der sonst notwendige Energiebedarf senken, die zu befürchtenden Entmischungen des Aufschlußgutes, z. B. beim Zwischenbunkern, treten nicht auf und es ergeben sich aufgrund der Agglomerate verbesserte Aufschlußbedingungen im Ofen.

Das erfindungsgemäße Verfahren soll durch das nachfolgend Beispiel noch näher erläutert werden.

Beispiel

100 Gew.-Teile eines fein gemahlenen Chromerzes mit einem $Cr_2O_3$-Gehalt von 44,5 Gew.-% wurden mit 230 Gew.-Teilen aus einem vorhergehenden Aufschluß stammenden, nach der Laugungsstufe filtrierten und gewaschenen Rückstandes mit 22 Gew.-% Wasser und ca. 8 Gew.-% $Cr_2O_3$ sowie mit 70 Gew.-Teilen Soda mit etwa 94 Gew.-% $Na_2CO_3$-Gehalt (das entspricht einem Alkaligehalt von etwa 105 % der stöchiometrisch erforderlichen Menge auf $Cr_2O_3$ im Feinerz bezogen) kontinuierlich in einem horizontal liegenden Mischer mit schnell rotierenden Werkzeugen gemischt. Dabei erhielt man 400 Gew.-Teilen einer krümeligen, erdfeuchten Mischung mit 12,7 Gew.-% Wasser. Nach dem Trocknen in einem Drehrohr bei etwa 100 bis 150 °C fielen 355 Gew.-Teile agglomerierte Mischung mit ca. 18 Gew.-% $Cr_2O_3$ an.

Diese Agglomerate mit einem Kornspektrum von 10 % unter 0,1 mm, 70 % von 0,1 bis 3 mm und 20 % über 3 mm, wurden über einen Zwischenbunker kontinuierlich einem Drehrohrofen mit Gegenstromführung der Feuerungsgase zugeführt. Die mittlere Verweilzeit betrug etwa 3 Stunden. Die Aufschlußtemperatur wurde bei 1 030 °C bis 1 080 °C gehalten.

Die Innenwandungen des ausgemauerten Drehrohres blieben völlig frei von Anbackungen. Im Ofenauslauf erhielt man ein Aufschlußgut in unverändert agglomerierter Form mit einem Gehalt an wasserlöslichem Chromat von ca. 26 Gew.- %, berechnet als $Na_2Cr_2O_7 \cdot 2H_2O$.

Das aufgeschlossene Material fiel noch heiß in eine Naßrohrmühle, in der gleichzeitig die Laugung stattfand. Anschließend erfolgte die Trennung des Rückstandsgutes von der Lauge über Trommelfilter. Nach dem Waschen des Filterkuchens erhielt man ein noch feuchtes Rückerz, das zum Teil wieder als Magerungsmittel bei der nachfolgenden Aufschlußreaktion eingesetzt wurde. Dieses Rückerz enthielt infolge des verbesserten Aufschlusses weniger $Cr_2O_3$ als das eingesetzte Rückerz.

Der Aufschlußgrad betrug etwa 90 %, bezogen auf $Cr_2O_3$ im eingesetzten Chromerz.

## Ansprüche

1. Verfahren zum oxidativen Aufschluß von chromhaltigen Erzen durch Agglomerieren eines Gemisches aus chromhaltigen Erzen, alkalischen Stoffen und Magerungsmitteln, Aufschluß und anschließendes Auslaugen dieser Mischung, dadurch gekennzeichnet, daß die Feuchtigkeit über feuchtes Rückerz eingebracht wird und daß das feuchte Rückerz mit fein verteiltem Chromerz und alkalischen Stoffen gemischt, agglomeriert, gegebenenfalls getrocknet und anschließend dem Aufschluß unterworfen wird.

2. Verfahren nach Anspruch 1 oder 2, dadurch gekennzeichnet, daß als alkalische Stoffe Natriumhydroxid oder Natriumcarbonat eingesetzt werden.

3. Verfahren nach einem oder mehreren der Ansprüche 1-3, dadurch gekennzeichnet, daß eine solche Menge feuchtes Rückerz zugesetzt wird, daß die erhaltenen Agglomerate zwischen 5 und 20 Gew.-%, vorzugsweise zwischen 10 und 15 Gew.-%, Feuchtigkeit enthalten.

## Claims

1. A process for the oxidative dissociation of chromecontaining ores by agglomerating a mixture of chromecontaining ores, alkaline substances and leaning agents, dissociating and then leaching this mixture, characterised in that the moisture is introduced by way of moist return ore and in that the moist return ore is mixed with finely divided chrome ore and alkaline substances, and the resulting mixture is agglomerated, optionally dried and subsequently subjected to dissociation.

2. A process according to Claim 1 or 2, characterised in that sodium hydroxide or sodium carbonate are used as the alkaline substances.

3. A process according to one or more of Claims 1-3, characterised in that the moist return ore is added in such a quantity that the agglomerates obtained have a moisture content of between 5 and 20 % by weight and preferably between 10 and 15 % by weight.

## Revendications

1. Procédé pour l'attaque oxydante de minerais contenant du chrome par agglomération d'un mélange de minerais contenant du chrome, de substances alcalines et d'agents amaigrissants, attaque et lixiviation subséquente de ce mélange, caractérisé en ce que l'humidité est apportée par l'intermédiaire de minerai de recyclage humide et en ce que le minerai de recyclage humide est mélangé avec un minerai de chrome à l'état de fine division et des substances alcalines, aggloméré, éventuellement séché puis soumis à l'attaque.

2. Procédé selon la revendication 1 ou 2, caractérisé en ce que l'on utilise en tant que substance alcaline l'hydroxyde de sodium ou le carbonate de sodium.

3. Procédé selon une ou plusieurs des revendications 1 à 3, caractérisé en ce que l'on ajoute le minerai de recyclage humide en quantité telle que les agglomérats obtenus contiennent de 5 à 20 % en poids, de préférence de 10 à 15 % en poids d'humidité.